# EUROPÄISCHE PATENTSCHRIFT

(11) **EP 2 979 350 B1**
(45) Veröffentlichungstag und Bekanntmachung des Hinweises auf die Patenterteilung: **31.05.2017**
(21) Anmeldenummer: 14718949.2
(22) Anmeldetag: 14.04.2014
(51) Int. Cl.: H02K 15/00

(54) **HERSTELLUNG EINES ROTORS EINER ELEKTRISCHEN ASYNCHRONMASCHINE**
PRODUCING A ROTOR OF AN ELECTRIC ASYNCHRONOUS MACHINE
PRODUCTION D'UN ROTOR DE MOTEUR ASYNCHRONE ÉLECTRIQUE

(30) Priorität: 29.04.2013 EP 13165694
(43) Veröffentlichungstag der Anmeldung: 03.02.2016
(73) Patentinhaber: Siemens Aktiengesellschaft, 80333 München (DE)
(72) Erfinder: BETHGE, Andreas, 13587 Berlin (DE); VOLKER, Kai-Uwe, 84405 Dorfen (DE)
(86) Internationale Anmeldenummer: PCT/EP2014/057484
(87) Internationale Veröffentlichungsnummer: WO 2014/177373

(56) Entgegenhaltungen:
- EP-A2- 2 390 987
- DE-A1-102010 021 470
- FR-A- 1 382 377
- JP-A- H05 260 710
- US-A- 2 784 333
- US-A- 4 679 314

## Beschreibung

Die Erfindung betrifft ein Verfahren zur Herstellung eines Rotors einer elektrischen Asynchronmaschine.

Rotoren sind Bestandteile elektrischer Asynchronmaschinen. Teilweise haben diese Maschinen Drehzahlen über 4000 Umdrehungen pro Minute und Leistungen von mehr als 1 Megawatt. Rotoren derartiger Maschinen müssen hohen mechanischen und thermischen Anforderungen genügen, beispielsweise aufgrund der Fliehkraftbelastung und starker Erwärmung.

WO 2005/124973 A1 offenbart ein Verfahren zur Herstellung eines Rotors für einen elektrischen Motor, bei dem ein im Wesentlichen zylindrischer Kern mit longitudinalen Nuten versehen wird, in die ein Diffusionsmaterial und elektrisch leitfähige Stäbe eingebracht und durch Hitze und Druck mit dem Kern verbunden werden.

JP H05 260710 A offenbart ein Verfahren zur Fertigung eines Kurzschlussläufers, wobei ein Pulvergemisch aus Aluminiumoxid-verstärktem Kupfer in Nuten in einem Blechpaket, welche Rotorstäbe und Endringe formen, eingebracht wird und wobei das Blechpaket von einem inneren Ring und einem Gehäuse verschlossen wird, wobei die Ränder miteinander verschweißt werden. Danach wird das Pudergemisch bei einer bestimmten Temperatur und unter einem bestimmten Druck in einem Container geschmolzen, sodass die Materialien durch eine Diffusionsverschweißung verbunden werden.

EP 2 390 987 A2 offenbart ein Verfahren zur Fertigung von Rotorstäben für eine elektrische Maschine, wobei jeder Rotorstab, ein erstes metallisches Material und ein zweites metallisches Material, welches um das erste metallische Material gegossen wird, aufweist. Die elektrische Leitfähigkeit des ersten metallischen Materials ist größer als die Leitfähigkeit des zweiten metallischen Materials.

US 4 679 314 A offenbart einen innengekühlten Rotor für eine Unipolarmaschine, aufweisend einen ferromagnetischen Kern aus Stahl, auf den ein zylindrischer Kupferleiter durch Diffusionsverschweißung aufgebracht ist, in dem eine Vielzahl von Kühlrohren eingebracht sind, die mit Kühlmittelkanälen im Kern verbunden sind. Die Kühlrohre werden mit Hilfe von Heiß Isostatischem Pressen eingebracht, bei dem der zylindrischer Kupferleiter zumindest teilweise durch Verdichtung eines Kupferpulvers zu einer nicht-porösen Masse hergestellt wird. Weiterer Stand der Technik ist durch die DE 10 2010 021 470 A gegeben. Derartige Verfahren verwenden als elektrisch leitfähige Stäbe beispielsweise zuvor einzeln hergestellte Kupferstäbe, die anschließend noch vernickelt werden und in die Nuten eingelegt, vakuumdicht gekapselt und durch Diffusionsschweißen mit dem Kern des Rotors verbunden werden. Da die Stäbe in die beispielsweise gefrästen oder gedrehten Wellennuten einlegbar sein müssen, unterliegen sie hohen Passgenauigkeitsanforderungen und die Produktion der Rotoren erfordert daher viele Prüfschritte.

Der Erfindung liegt die Aufgabe zugrunde, ein verbessertes Verfahren zur Herstellung von Rotoren elektrischer Asynchronmaschinen anzugeben.

Die Aufgabe wird erfindungsgemäß durch die Merkmale des Anspruchs 1 gelöst.

Vorteilhafte Ausgestaltungen der Erfindung sind Gegenstand der Unteransprüche.

Bei dem erfindungsgemäßen Verfahren zur Herstellung eines Rotors einer elektrischen Asynchronmaschine wird zunächst eine Trägerwelle mit Wellennuten hergestellt. Auf die Trägerwelle wird dann ein Kurzschlussläufer aufgebracht. Zum Aufbringen des Kurzschlussläufers werden die Trägerwelle und ein elektrisch leitfähiges Schüttgut in einen Behälter eingebracht, so dass das Schüttgut die Wellennuten ausfüllt. Das Schüttgut wird in dem Behälter durch Heiß Isostatisches Pressen (HIP) verdichtet und mit der Trägerwelle verbunden. Der Behälter wird nach dem Heiß Isostatischen Pressen von der Trägerwelle getrennt.

Erfindungsgemäß wird der Kurzschlussläufer des Rotors also aus einem in die Wellennuten der Trägerwelle eingebrachten Schüttgut hergestellt, das durch Heiß Isostatisches Pressen verdichtet und mit der Trägerwelle verbunden wird. Dadurch entfällt vorteilhaft die aus dem Stand der Technik bekannte Anfertigung einzelner in die Wellennuten passender Formteile sowie das einzelne Einbringen der Formteile in die Wellennuten. Das erfindungsgemäße Verfahren vereinfacht somit die Herstellung von Kurzschlussläufern wesentlich gegenüber dem aus dem Stand bekannten Verfahren, bei dem in die Wellennuten einzelne Formteile eingebracht werden. Außerdem reduziert das erfindungsgemäße Verfahren auch die Herstellungskosten, da die kostenintensive Einzelherstellung passgenauer Formteile entfällt.

Ein weiterer Vorteil des erfindungsgemäßen Verfahrens besteht darin, dass es eine einfache Herstellung auch komplizierter geometrischer Formen von Kurzschlussläufern ermöglicht, indem lediglich die Wellennuten entsprechend gestaltet werden. Dadurch ermöglicht das Verfahren die einfache Herstellung von Kurzschlussläufern mit optimierten mechanischen und elektrischen Eigenschaften, insbesondere hinsichtlich der mechanischen Festigkeit und dem elektrischen Wirkungsgrad der Kurzschlussläufer.

Eine Ausgestaltung der Erfindung sieht vor, dass als Schüttgut ein vernickeltes Kupfer-Schüttgut verwendet wird.

Eine weitere Ausgestaltung der Erfindung sieht vor, dass die Trägerwelle aus einem Stahl gefertigt wird.

Kupfer eignet sich vor allem wegen seiner guten elektrischen Leitfähigkeit vorteilhaft als Material für Kurzschlussläufer.

Die Vernickelung des Kupfer-Schüttguts ist vorteilhaft, da sich Nickel metallurgisch als besonders geeigneter Diffusionsstoff für eine feste Verbindung von Kupfer mit einer Trägerwelle erwiesen hat, insbesondere wenn die Trägerwelle aus Stahl gefertigt ist. Die Vernickelung des Kupfer-Schüttguts hat außerdem den Vorteil, dass eine separate Vernicklung von Abschnitten des Kurzschlussläufers wie etwa die Einzelvernickelung der Kupferstäbe in dem oben genannten bekannten Verfahren entfällt.

Stahl eignet sich vor allem wegen seiner Festigkeit vorteilhaft als Material für Trägerwellen.

Eine weitere Ausgestaltung der Erfindung sieht vor, dass der Behälter im Wesentlichen als ein geschlossenes Blechrohr ausgebildet ist.

Diese Ausgestaltung ermöglicht vorteilhaft eine einfache und kostengünstige Herstellung für Heiß Isostatisches Pressen geeigneter Behälter. Das Blechrohr dient dabei einerseits der Formgebung des Kurzschlussläufers durch die Definition des vom Schüttgut auszufüllenden Raumes, und andererseits verhindert das Blechrohr das Eindringen von bei dem Heiß Isostatischen Pressen verwendeten Prozessgas in das Schüttgut und eine durch ein derartiges Eindringen von Prozessgas verursachte Porosität des hergestellten Kurzschlussläufers.

Eine weitere Ausgestaltung der Erfindung sieht vor, dass der Behälter eine zu der Trägerwelle korrespondierende Form und Größe hat, so dass eine von Wellennuten unterbrochene Außenseite der Trägerwelle nach deren Einbringen in den Behälter an einer Innenseite des Behälters anliegt.

Diese Ausgestaltung ermöglicht es, den von Schüttgut ausgefüllten Raum geeignet zu begrenzen und einen Rotor mit einer glatten Oberfläche herzustellen.

Eine weitere Ausgestaltung der Erfindung sieht vor, dass die Trägerwelle und der Behälter im Wesentlichen zylindrisch geformt sind.

Dadurch wird ein Rotor mit einer zylindrischen Form hergestellt, die im Allgemeinen für die Rotation des Rotors besonders vorteilhaft ist.

Bei dieser Ausgestaltung der Erfindung wird der Behälter vorzugsweise mittels einer Abdrehbewegung von der Trägerwelle getrennt.

Dadurch wird der Behälter in besonders einfacher und kostengünstiger Weise von der Trägerwelle entfernt.

Eine weitere Ausgestaltung der Erfindung sieht vor, dass die Trägerwelle und der Behälter derart gestaltet werden, dass der von dem Schüttgut in dem Behälter ausgefüllte Raum eine zusammenhängende Struktur hat.

Auf diese Weise wird durch das Heiß Isostatische Pressen in einem einzigen Herstellungsschritt direkt ein zusammenhängender Kurzschlussläufer erzeugt, so dass ein zusätzliches elektrisch leitfähiges Verbinden einzelner Abschnitte des Kurzschlussläufers vorteilhaft entfällt.

Eine weitere Ausgestaltung der Erfindung sieht vor, dass der Behälter bei dem Heiß Isostatischen Pressen in einem mit einem Prozessgas befüllten Autoklaven erhitzt wird. Als Prozessgas wird dabei vorzugsweise Argon verwendet.

Diese Ausgestaltungen der Erfindung machen sich bekannte und bewährte Ausführungen Heiß Isostatischen Pressens zu Nutze. Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Dabei zeigen:
- FIG 1: schematisch eine Trägerwelle eines Rotors einer elektrischen Asynchronmaschine in einem Behälter, und
- FIG 2: schematisch eine Trägerwelle eines Rotors einer elektrischen Asynchronmaschine und elektrisch leitfähiges Schüttgut in einem Behälter.

Einander entsprechende Teile sind in den Figuren mit den gleichen Bezugszeichen versehen.

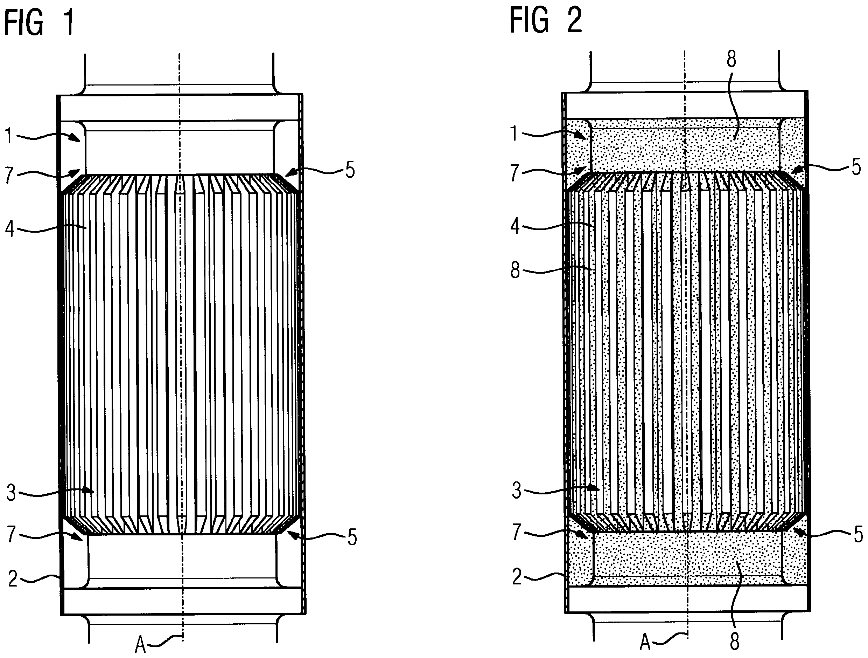

Figur 1 zeigt schematisch eine Trägerwelle 1 eines Rotors einer elektrischen Asynchronmaschine in einem Behälter 2.

Die Trägerwelle 1 ist im Wesentlichen kreiszylindrisch gestaltet, wobei ein Zylindermantel 3 der Trägerwelle 1 eine Vielzahl parallel zu einer Zylinderachse A verlaufender Wellennuten 4 aufweist. Die Endabschnitte 5 des Zylindermantels 3 sind konisch in Form von Kegelstümpfen gestaltet, die sich zu den Enden des Zylindermantels 3 hin verengen.

Der Behälter 2 ist ebenfalls kreiszylindrisch gestaltet, wobei sein Innendurchmesser dem Außendurchmesser des Zylindermantels 3 der Trägerwelle 1 entspricht. Der Zylindermantel 3 des Behälters 2 ist als ein Blechrohr ausgebildet.

Bei dem erfindungsgemäßen Verfahren zur Herstellung des Rotors wird die Trägerwelle 1 wie in Figur 1 gezeigt in den Behälter 2 eingebracht, so dass das Blechrohr an dem die Wellennuten 4 aufweisenden Zylindermantel 3 der Trägerwelle 1 anliegt. Der Behälter 2 ist in Figur 1 aufgeschnitten dargestellt, um die Lage der Trägerwelle 1 innerhalb des Behälters 2 klar zu machen. Die Längsausdehnung des Behälters 2 übertrifft die Längsausdehnung des Zylindermantels 3 der Trägerwelle 1, so dass nach dem Einbringen der Trägerwelle 1 in den Behälter 2 wie in Figur 1 gezeigt Endbereiche 7 des Innenraums des Behälters 2, die von den Endabschnitten 5 des Zylindermantels 3 der Trägerwelle 1 begrenzt werden, frei bleiben und die Wellennuten 4 in diese Endbereiche 7 münden.

Wie Figur 2 zeigt wird der von der Trägerwelle 1 nicht eingenommene Raum innerhalb des Behälters 2 mit einem elektrisch leitfähigen Schüttgut 8 gefüllt, so dass das Schüttgut 8 die Wellennuten 4 der Trägerwelle 1 sowie die Endbereiche 7 des Innenraums des Behälters 2 ausfüllt. Da die Wellennuten 4 in die Endbereiche 7 münden, hat der von dem Schüttgut 8 in dem Behälter 2 ausgefüllte Raum eine zusammenhängende Struktur.

Das Schüttgut 8 ist in diesem Ausführungsbeispiel ein vernickeltes Kupfer-Schüttgut.

Erfindungsgemäß wird das Schüttgut 8 in dem Behälter 2 durch Heiß Isostatisches Pressen verdichtet und mit der Trägerwelle 1 verbunden, wobei der Behälter 2 in einem mit Argon als Prozessgas befüllten Autoklaven unter hohem Druck erhitzt wird. Dadurch entsteht ein auf die Trägerwelle 1 aufgebrachter zusammenhängender Kurzschlussläufer, der von dem verdichteten Schüttgut 8 gebildet wird. Das Blechrohr des Behälters 2 wird nach dem Heiß Isostatischen Pressen von der Trägerwelle 1 abgedreht.

Obwohl die Erfindung im Detail durch ein bevorzugtes Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen, welcher durch die Ansprüche definiert ist.

## Patentansprüche

1. Verfahren zur Herstellung eines Rotors einer elektrischen Asynchronmaschine, bei dem
- eine Trägerwelle (1) mit Wellennuten (4) hergestellt wird,
- und auf die Trägerwelle (1) ein Kurzschlussläufer aufgebracht wird, wobei
- die Trägerwelle (1) und ein elektrisch leitfähiges Schüttgut (8) in einen Behälter (2) eingebracht werden, so dass das Schüttgut (8) die Wellennuten (4) ausfüllt,
- das Schüttgut (8) in dem Behälter (2) durch Heiß Isostatisches Pressen verdichtet und mit der Trägerwelle (1) verbunden wird,
- und der Behälter (2) nach dem Heiß Isostatischen Pressen von der Trägerwelle (1) getrennt wird,
- wobei als Schüttgut (8) ein vernickeltes Kupfer-Schüttgut verwendet wird und
- wobei Nickel als Diffusionsstoff für eine feste Verbindung von Kupfer mit der Trägerwelle verwendet wird.

2. Verfahren nach einem der vorhergehenden Ansprüche,
**dadurch gekennzeichnet, dass** die Trägerwelle (1) aus einem Stahl gefertigt wird.

3. Verfahren nach einem der vorhergehenden Ansprüche,
**dadurch gekennzeichnet, dass** der Behälter (2) im Wesentlichen als ein geschlossenes Blechrohr ausgebildet ist.

4. Verfahren nach einem der vorhergehenden Ansprüche,
**dadurch gekennzeichnet, dass** der Behälter (2) eine zu der Trägerwelle (1) korrespondierende Form und Größe hat, so dass eine von Wellennuten (4) unterbrochene Außenseite der Trägerwelle (1) nach deren Einbringen in den Behälter (2) an einer Innenseite des Behälters (2) anliegt.

5. Verfahren nach einem der vorhergehenden Ansprüche,
**dadurch gekennzeichnet, dass** die Trägerwelle (1) und der Behälter (2) im Wesentlichen zylindrisch geformt sind.

6. Verfahren nach Anspruch 5,
**dadurch gekennzeichnet, dass** der Behälter (2) mittels einer Abdrehbewegung von der Trägerwelle (1) getrennt wird.

7. Verfahren nach einem der vorhergehenden Ansprüche,
**dadurch gekennzeichnet, dass** die Trägerwelle (1) und der Behälter (2) derart gestaltet werden, dass der von dem Schüttgut (8) in dem Behälter (2) ausgefüllte Raum eine zusammenhängende Struktur hat.

8. Verfahren nach einem der vorhergehenden Ansprüche,
**dadurch gekennzeichnet, dass** der Behälter (2) beim Heiß Isostatischen Pressen in einem mit einem Prozessgas befüllten Autoklaven erhitzt wird.

9. Verfahren nach Anspruch 8,
**dadurch gekennzeichnet, dass** als Prozessgas Argon verwendet wird.

## Claims

1. Method for producing a rotor of an asynchronous electric machine, in which
- a carrier shaft (1) having shaft slots (4) is produced,
- and a squirrel cage rotor is applied to the carrier shaft (1), wherein
- the carrier shaft (1) and an electrically conductive bulk material (8) are inserted into a container (2) so that the bulk material (8) fills up the shaft slots (4),
- the bulk material (8) is compacted in the container (2) by hot isostatic pressing and bonded to the carrier shaft (1),
- and, after the hot isostatic pressing, the container (2) is detached from the carrier shaft (1),
- wherein a nickeled copper bulk material is used as the bulk material (8) and
- wherein nickel is used as a diffusion material for permanently bonding copper to the carrier shaft.

2. Method according to one of the preceding claims,
**characterised in that** the carrier shaft (1) is made of steel.

3. Method according to one of the preceding claims,
**characterised in that** the container (2) is essentially implemented as a closed metal tube.

4. Method according to one of the preceding claims,
**characterised in that** the container (2) has a shape and size corresponding to the carrier shaft (1) so that an outer side of the carrier shaft (1) interspersed with shaft slots (4) is in contact with an inner side of the container (2) after it has been inserted into the container (2).

5. Method according to one of the preceding claims,
**characterised in that** the carrier shaft (1) and the container (2) are essentially cylindrical in shape.

6. Method according to claim 5,
**characterised in that** the container (2) is detached from the carrier shaft (1) by a twist-off motion.

7. Method according to one of the preceding claims,
**characterised in that** the carrier shaft (1) and the container (2) are designed such that the space filled by the bulk material (8) in the container (2) has a cohesive structure.

8. Method according to one of the preceding claims,
**characterised in that** the container (2) is heated in a process-gas-filled autoclave during hot isostatic pressing.

9. Method according to claim 8,
**characterised in that** argon is used as the process gas.

## Revendications

1. Procédé de fabrication d'un rotor d'une machine asynchrone électrique, dans lequel
- on fabrique un arbre ( 1 ) de support ayant des cannelures ( 4 ),
- on met, sur l'arbre ( 1 ) de support, un induit en court-circuit, dans lequel
- on introduit l'arbre ( 1 ) de support et un produit ( 8 ) en vrac conducteur de l'électricité dans un récipient ( 2 ), de manière à ce que le produit ( 8 ) en vrac remplisse les cannelures ( 4 ) de l'arbre,
- on comprime le produit ( 8 ) en vrac dans le récipient ( 2 ) par compression isostatique à chaud et on le relie à l'arbre ( 1 ) de support,
- et on sépare le récipient ( 2 ) de l'arbre (1) de support après la compression isostatique à chaud,
- dans lequel on utilise comme produit ( 8 ) en vrac un produit en vrac en cuivre nickelé et
- dans lequel on utilise du nickel comme substance de diffusion pour une liaison solide du cuivre à l'arbre de support.

2. Procédé suivant l'une des revendications précédentes, **caractérisé en ce qu'**on fabrique l'arbre ( 1 ) de support en un acier.

3. Procédé suivant l'une des revendications précédentes,
**caractérisé en ce que** le récipient ( 2 ) est constitué sensiblement sous la forme d'un tuyau de tôle fermé.

4. Procédé suivant l'une des revendications précédentes,
**caractérisé en ce que** le récipient ( 2 ) a une forme et dimension correspondant à l'arbre ( 1 ) de support, de sorte qu'une face extérieure, interrompue par des cannelures ( 4 ) de l'arbre, s'applique, après l'introduction de celui-ci dans le récipient ( 2 ), à une face intérieure du récipient ( 2 ).

5. Procédé suivant l'une des revendications précédentes,
**caractérisé en ce que** l'arbre ( 1 ) de support et le récipient ( 2 ) sont sensiblement cylindriques.

6. Procédé suivant la revendication 5,
**caractérisé en ce qu'**on sépare le récipient ( 2 ) de l'arbre ( 1 ) de support au moyen d'un mouvement de rotation.

7. Procédé suivant l'une des revendications précédentes,
**caractérisé en ce que** l'on conforme l'arbre ( 1 ) de support et le récipient ( 2 ), de manière à ce que l'espace rempli du produit ( 8 ) en vrac dans le récipient ( 2 ) ait une structure d'un seul tenant.

8. Procédé suivant l'une des revendications précédentes,
**caractérisé en ce qu'**on chauffe le récipient ( 2 ), lors de la compression isostatique à chaud, dans un autoclave empli d'un gaz de processus.

9. Procédé suivant la revendication 8,
**caractérisé en ce qu'**on utilise de l'argon comme gaz de processus.
